# DEMANDE DE BREVET EUROPEEN

(11) **EP 0 610 109 A1**
(43) Date de publication de la demande: **10.08.1994**
(21) Numéro de dépôt: 94400110.6
(22) Date de dépôt: 18.01.1994
(51) Int. Cl.: H04N 5/76, H04N 7/18, G11B 27/10

(54) **Installation audiovisuelle pour salles de conférences**

(30) Priorité: 19.01.1993 FR 9300469
(71) Demandeur: Brissiaud, Jean-Jacques, F-78792 Septeuil (FR)
(72) Inventeur: Brissiaud, Jean-Jacques, F-78792 Septeuil (FR)
(74) Mandataire: Tanguy, Gilbert André

(57) **Abrégé**

Installation audiovisuelle pour un conférencier, permettant à celui-ci de contrôler la diffusion d'informations audiovisuelles simultanément à son exposé.

L'installation comprend principalement un lecteur d'informations représentatives d'images (12), des moyens de visualisation de ces images (24), une unité centrale (11) et un moniteur de commande (14) sur lequel le texte de la conférence mémorisé au niveau de l'unité centrale s'affiche et comportant des moyens pour adresser à cette même unité centrale des signaux de commande aptes à piloter le lecteur (12).

## Description

L'invention se rapporte à une installation audiovisuelle pour salle de conférences et concerne plus particulièrement une combinaison de moyens améliorant les possibilités d'expression du conférencier ou en lui apportant une assistance optimale.

Pour que son exposé soit compréhensif et intéressant, un conférencier peut éprouver le besoin d'illustrer ses propos par un film ou une succession d'images fixes. Il doit aussi pouvoir légitimement disposer d'une sonorisation de qualité offrant de préférence une possibilité de dialogue avec l'auditoire. Beaucoup de salles sont équipées de matériel vétuste et/ou insuffisant. En outre, même lorsque la salle est équipée de matériel de projection, il est difficile pour le conférencier ou son assistant de synchroniser parfaitement la projection des images au commentaire parlé.

L'invention permet notamment de surmonter tous ces problèmes.

L'invention concerne une installation audiovisuelle pour salle de conférences, caractérisée en ce qu'elle comprend en combinaison :
- un lecteur d'informations représentatives d'images,
- des moyens de visualisation des informations délivrées par ledit lecteur ;
- une unité centrale pourvue de moyens de stockage d'informations représentatives d'un texte et,
- un moniteur de commande, de préférence du type à écran tactile, couplé à l'unité centrale pour afficher ledit texte et pour adresser à ladite unité centrale des signaux de commande aptes à piloter ledit lecteur d'informations représentatives d'images.

De préférence, ledit lecteur d'informations représentatives d'images sera un lecteur de vidéodisques, à lecture par faisceau. Le vidéodisque utilisé sera du type enregistrable et permettra ainsi le stockage de séquences filmées ou d'une succession d'images fixes obtenues par exemple à partir de diapositives. Les moyens de visualisation précités pourront être constitués par un vidéoprojecteur.

Selon une autre caractéristique avantageuse de l'invention, l'installation sera complétée par un moniteur de contrôle placé à proximité du moniteur de commande et connecté pour visualiser les informations délivrées par ledit lecteur d'informations représentatives d'images. De cette façon, le conférencier pourra suivre, côte à côte, le déroulement du texte qu'il a prévu de dire et celui des images qu'il a choisies pour illustrer ce texte.

Enfin, il est à noter que les différents éléments constitutifs de l'invention pourront avantageusement être installés dans au moins deux caissons autoporteurs, transportables, munis de prises d'interconnexion. Cet agencement en caissons séparés permettra, par exemple, au conférencier de voyager de ville en ville avec son propre matériel audiovisuel complet, sans avoir à se préoccuper de la qualité des équipements des salles publiques dans lesquelles il doit intervenir.

L'invention sera mieux comprise et d'autres avantages de celle-ci apparaîtront plus clairement à la lumière de la description qui va suivre d'une installation audiovisuelle conforme à son principe, donnée uniquement à titre d'exemple et faite en référence aux dessins annexés dans lesquels :
- la figure 1 est un schéma-bloc d'une installation audiovisuelle conforme à l'invention ;
- la figure 2 est une vue schématique d'un mode de réalisation concret de l'installation, montrant la disposition des différents sous-ensembles les uns par rapport aux autres, le pupitre de contrôle étant ouvert ;
- la figure 3 est une vue schématique selon la flèche III de la figure 2, le pupitre de contrôle étant fermé.

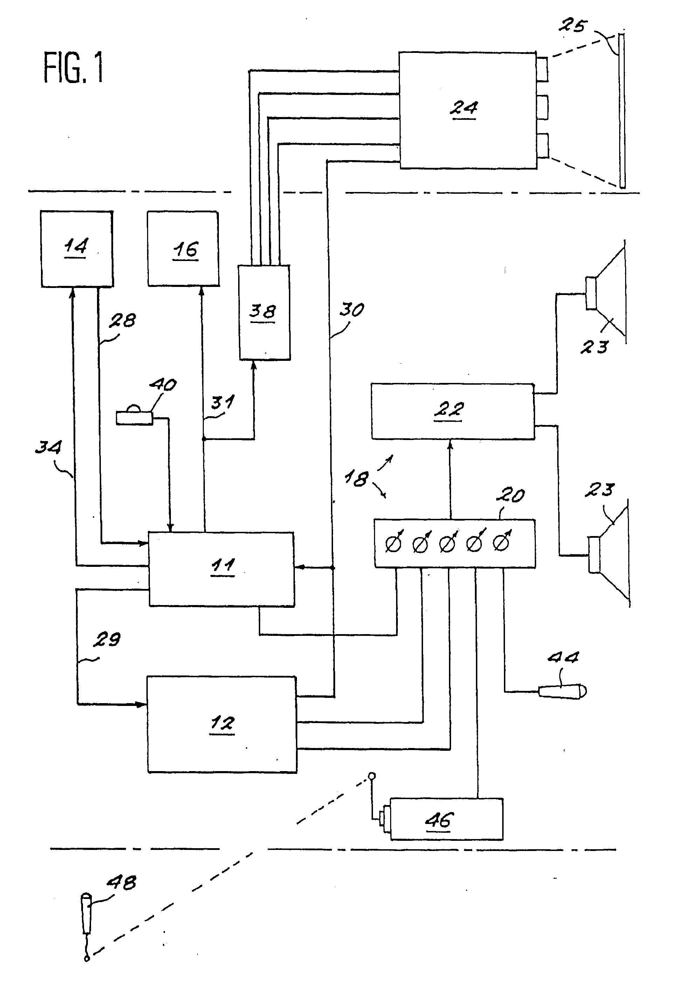

En considérant plus particulièrement la figure 1, l'installation audiovisuelle destinée à équiper une salle de conférences comporte principalement : un ordinateur ou unité centrale 11, un lecteur d'informations représentatives d'images 12, en l'occurrence ici un lecteur à faisceau laser de disques audio-vidéo, un moniteur de commande 14, du type à écran tactile, un moniteur de contrôle 16, des moyens de visualisation des informations délivrées par le moniteur 12, constitués ici par un vidéoprojecteur 24 et un écran 25, et un ensemble audiofréquence 18 comprenant un préamplificateur-mélangeur 20, un amplificateur de puissance 22 et des haut-parleurs 23. Les deux moniteurs 14 et 16 sont placés côte à côte, à la disposition du conférencier. Conformément à l'acception usuelle dans la technique, on entend par "moniteur" un téléviseur ne comportant que les circuits électroniques de traitement audio-vidéo, à l'exception de circuits de détection haute fréquence et de démodulation. Le moniteur de contrôle 16 est des plus classiques. Le moniteur de commandes 14, à écran tactile est plus spécifique mais néanmoins de type connu. Il comprend un tube cathodique muni de moyens sensibles au toucher, aptes à élaborer des signaux de commandes différenciés suivant la zone de l'écran touchée par l'utilisateur. Cependant, les mêmes fonctions pourraient être obtenues par un moniteur classique, identique au moniteur 16, complété par un ensemble de touches de commande, comme par exemple un clavier. Une autre possibilité consisterait à associer le moniteur à un système à commande vocale piloté par un microphone à la disposition du conférencier. Le dispositif de reconnaissance vocale pourrait générer les commandes souhaitées à partir de mots clefs ou groupes de mots clefs prononcés. Ces signaux de commande sont adressés à l'unité centrale (liaison 28) elle-même connectée par une liaison de commande 29 pour piloter au moins le lecteur 12 (marche, arrêt, arrêt sur image, retour en arrière, etc...). Ce lecteur est couplé au vidéoprojecteur 24 par une liaison vidéo 30. Ces mêmes informations vidéo, fournies par le lecteur 12 sont en outre appliquées à l'entrée du moniteur de contrôle 13 (liaison 31) via l'unité centrale 11 par laquelle elles transitent.

Comme mentionné précédemment, le lecteur de vidéodisque est du type à faisceau laser. Le disque est enregistrable de sorte que le conférencier ait pu y stocker des séquences d'illustration et/ou une succession d'images fixes (reprises de diapositives) susceptibles d'être reproduites par le vidéoprojecteur. L'unité centrale 11 remplit notamment les fonctions suivantes :
- Du fait qu'elle est classiquement associée à une mémoire ou un lecteur de disquettes (non représenté), l'unité centrale peut contenir et gérer des informations numériques représentatives d'un texte ou discours destiné à être lu par le conférencier. Ces informations sont visualisées sur le moniteur de commande 14 (liaison 34), par exemple page par page. Avantageusement, on peut présenter le texte avec des mots clefs entourés ou associés à d'autres signes distinctifs. En touchant la zone où apparaît tel ou tel mot clef, le conférencier provoque l'élaboration de signaux de commande différenciés qui, gérés par l'unité centrale 11, permettent d'agir sur le fonctionnement du lecteur 12 (changement d'image fixe, accélération ou ralenti, arrêt sur image, retour en arrière etc...) et par conséquent sur le déroulement des images diffusées par le vidéoprojecteur 24, lesquelles sont reproduites à titre de contrôle sur le moniteur 16. Ces moyens de production d'images de synthèse à partir de l'ordinateur peuvent se substituer purement et simplement au lecteur de vidéodisque dans une version simplifiée. Autrement dit, le lecteur d'informations représentatives d'images peut se résumer à l'unité centrale 11 (associée à une capacité de mémorisation suffisante) et au décodeur 38.
- L'unité centrale 11 peut aussi être pourvue d'un logiciel permettant le stockage et la diffusion d'images de synthèse susceptibles d'être reproduites par le vidéoprojecteur 24 via un décodeur 38 à sorties RVB. Dans ce cas, les images sont aussi adressées au moniteur 16.
- Dans l'exemple représenté, l'unité centrale 11 est aussi équipée d'un dispositif de commande de déplacement d'index 40 (souvent dénommé "souris" dans le domaine de la microinformatique) qui permet d'afficher et faire évoluer un index en surimpression sur l'image délivrée par le vidéodisque. Cet index mobile apparaît donc sur l'image diffusée par le vidéoprojecteur 4 et sur le moniteur 16.

Comme indiqué ci-dessus, l'unité de reproduction audiofréquence 18 comporte un préamplificateur-mélangeur 20 assurant le "mixage" et/ou la sélection de diverses sources audiofréquence, un amplificateur de puissance 22 relié au préamplificateur et des haut-parleurs 23 connectés à des sorties de l'amplificateur 22. Parmi les sources audiofréquence connectées au préamplificateur 20, on peut citer un microphone 44 à l'usage du conférencier et placé sur un pupitre au voisinage des deux moniteurs 14 et 16. Les sorties audiofréquence du lecteur de vidéodisque 12 sont également connectées à des entrées du préamplificateur. L'une des entrées est aussi avantageusement connectée à la sortie d'un récepteur HF 46 couplé par une liaison hertzienne à un microphone HF 48, (microphone sans fil) déplaçable dans la salle pour permettre à des intervenants de s'exprimer. L'unité centrale 11 peut aussi être connectée à une entrée du préamplificateur pour la transmission d'autres messages sonores non enregistrés sur le disque audio-vidéo.

De nombreuses variantes sont possibles notamment dans le sens d'une simplification du matériel. Ainsi le lecteur d'informations représentatives d'images et les moyens de visualisation des informations délivrées par celui-ci peuvent être remplacés par un simple projecteur de diapositives. Dans ce cas, les ordres de commandes élaborés par le moniteur 14 et l'unité centrale 11 pilotent le passage des diapositives, image par image. On peut aussi envisager de remplacer le lecteur de disque audio-vidéo 12 par un magnétoscope ou un autre dispositif analogue.

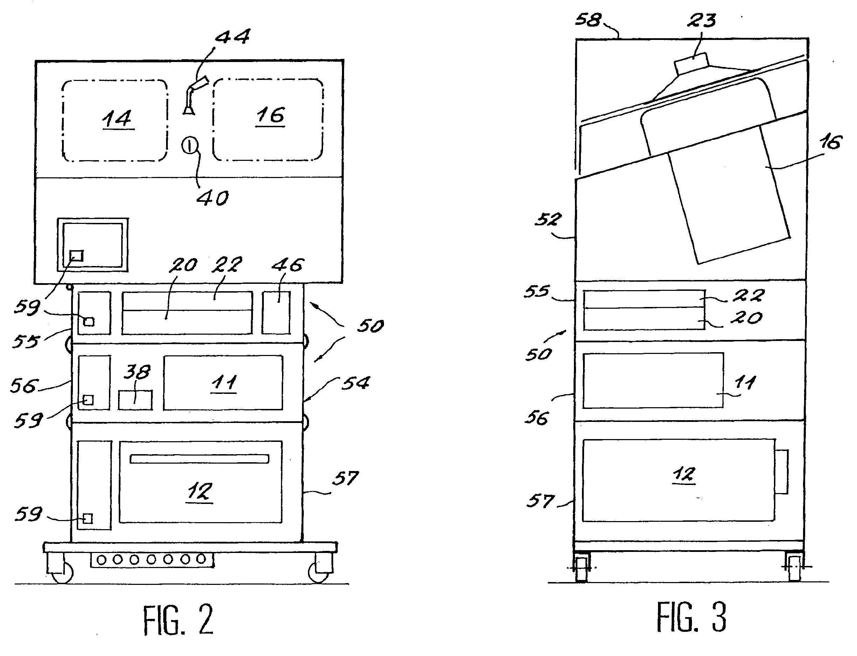

Les figures 2 et 3 montrent une réalisation particulière d'une installation conforme à l'invention. Cette installation est mobile et démontable, les sous-ensembles étant regroupés dans un certain nombre de caissons autoporteurs, individuellement et facilement transportables. Ces caissons sont assemblables de façon à former un pupitre ou console 50. Ainsi, on distingue un caisson 52 dans lequel sont installés côte à côte les 2 moniteurs 14, 16, le microphone 44 et le dispositif de commandes 40. Ce caisson 52 forme la partie supérieure dudit pupitre, le piétement 54 est constitué par un ou plusieurs autres caissons, 55,56,57, dissociables ou non. Dans l'exemple, le caisson 55 renferme la partie BF (préamplificateur 20, amplificateur 22 et récepteur 46), le caisson 56 renferme principalement l'unité centrale 11 et le décodeur 38 tandis que le caisson 57 renferme essentiellement le lecteur de vidéodisque 12. Un couvercle 58 du caisson 52 protège les moniteurs lorsque la console n'est pas en service. Il peut avantageusement abriter les haut-parleurs 23. Tous les caissons comportent des prises de raccordement 59 placées latéralement en façade et permettant leur raccordement rapide, au moyen de cordons de liaison adaptés. L'utilisation d'une telle installation audiovisuelle résulte avec évidence de la description qui précède. Le conférencier, à partir de son moniteur de commandes 14 à écran tactile peut piloter l'unité centrale et maîtriser ainsi complètement le déroulement de la conférence. Le texte qu'il a préparé est affiché page par page sur le moniteur 14. Les mots clefs repérés comme indiqué ci-dessus permettent, selon un programme prédéfini, de projeter sur l'écran 25 une succession de séquences animées ou d'images fixes. Une bande sonore (musique, bruitage) est simultanément reproduite par l'unité 18.

Le conférencier peut à tout moment intervenir sur le séquencement de sa conférence. Il peut interrompre momentanément la diffusion des images pour donner la parole à l'auditoire, faire des retours en arrière pour illustrer ses réponses, souligner un détail par le déplacement de l'index en contrôlant la position de celui-ci sur le moniteur 16, etc...

Les domaines d'application sont très nombreux on peut citer la formation en entreprise, la formation du grand public par diffusion de films documentaires, les présentations d'expositions, de manifestations artistiques, les réunions politiques, les cours magistraux dans les écoles et universités...

## Revendications

**1 -** Installation audiovisuelle pour salle de conférences caractérisée en ce qu'elle comprend en combinaison :
- un lecteur d'informations représentatives d'images (12,11-38),
- des moyens de visualisation (24,25) des informations délivrées par ledit lecteur,
- une unité centrale (11) pourvue de moyens de stockage d'informations représentatives d'un texte,
- un moniteur de commande (14), de préférence du type à écran tactile, couplé à ladite unité centrale pour afficher ledit texte et pour adresser à ladite unité centrale des signaux de commande aptes à piloter ledit lecteur d'informations représentatives d'images.

**2 -** Installation selon la revendication 1 caractérisée en ce que ledit lecteur d'informations représentatives d'images est un lecteur de vidéodisque (12).

**3 -** Installation selon la revendication 1 ou 2 caractérisée en ce que lesdits moyens de visualisation des informations délivrées par ledit lecteur comprennent un vidéoprojecteur 24.

**4 -** Installation selon l'une des revendications précédentes, caractérisée en ce qu'elle comporte un moniteur de contrôle (16) placé à proximité du moniteur de commande (14) et connecté pour visualiser les informations délivrées par le lecteur d'informations représentatives d'images (12).

**5 -** Installation selon l'une des revendications précédentes, caractérisée en ce qu'elle comporte une unité de reproduction audiofréquence (18) dont une entrée est reliée à un microphone (44) situé à proximité dudit moniteur de commande.

**6 -** Installation selon l'ensemble des revendications 2 et 5, caractérisée en ce que ladite unité de reproduction audiofréquence est reliée au lecteur de vidéodisque.

**7 -** Installation selon la revendication 5 ou 6, caractérisée en ce qu'une entrée de ladite unité de reproduction audiofréquence est reliée à un récepteur HF (46) d'un système de microphone sans fil.

**8 -** Installation selon l'une des revendications 4 à 7, caractérisée en ce que les deux moniteurs (14, 16) sont installés dans un même caisson (52) transportable.

**9 -** Installation selon l'une des revendications 5 à 8, caractérisée en ce que les deux moniteurs (14, 16), ladite unité centrale (11), ledit lecteur (12) et ladite unité de reproduction audiofréquence (18) sont répartis dans au moins deux caissons autoporteurs transportables munis de prises d'interconnexion (59).
